# EUROPÄISCHE PATENTSCHRIFT

(11) **EP 1 098 763 B1**
(45) Veröffentlichungstag und Bekanntmachung des Hinweises auf die Patenterteilung: **18.12.2002**
(21) Anmeldenummer: 99934542.4
(22) Anmeldetag: 29.06.1999
(51) Int. Cl.: B32B 27/08, B65D 65/40

(54) **MEHRSCHICHTIGE, SYMMETRISCHE, ROLLNEIGUNGSFREIE, COEXTRUDIERTE TIEFZIEHFOLIE**
MULTILAYERED, SYMMETRICAL, NON-CURLING COEXTRUDED DEEP-DRAWN FOIL
FEUILLE A EMBOUTIR COEXTRUDEE, SYMETRIQUE, A PLUSIEURS COUCHES ET N'AYANT PAS TENDANCE A S'ENROULER

(30) Priorität: 10.07.1998 DE 19830977
(43) Veröffentlichungstag der Anmeldung: 16.05.2001
(73) Patentinhaber: Wipak Walsrode GmbH & Co. KG, 29656 Walsrode (DE)
(72) Erfinder: KASCHEL, Gregor, D-29699 Bomlitz (DE)
(74) Vertreter: Kutzenberger, Helga, Dr.
(86) Internationale Anmeldenummer: EP9904479
(87) Internationale Veröffentlichungsnummer: WO00002724

(56) Entgegenhaltungen:
- EP-A- 0 219 329
- DE-A- 3 618 775
- US-A- 5 419 795

## Beschreibung

Die vorliegende Erfindung betrifft eine tiefziehbare, mehrschichtige, symmetrische, coextrudierte Folie enthaltend Polyamid, Polyolefine bzw. auf Olefinen basierende Copolymere. Diese Folie eignet sich besonders für extreme Tiefziehanwendungen mit niedrigen Formtemperaturen, die eine sehr hohe Durchstichfestigkeit erfordern. Da die erfindungsgemäße Folie völlig symmetrisch aufgebaut ist, besitzt sie keine Rollneigung. Bei Kunststoffverpackungen ist dies ein wichtiges Kriterium, um die Verpackungen in den Abholmärkten attraktiv präsentieren zu können.

Zur Vereinfachung der Diskussion des Standes der Technik und der Erfindung werden nachfolgend die Polymere näher erläutert, die fiir Folien auf dem Gebiet der vorliegenden Erfindung verwendet werden, und für diese Polymere Abkürzungen zur Verwendung in der weiteren Beschreibung eingeführt. Soweit hier spezifische Polymere genannt sind, sind diese für die entsprechenden Schichten der erfindungsgemäßen Folie geeignet.

Unter Polyamid (Abkürzung "PA") versteht man im weitesten Sinne polymere Verbindungen, die durch die Säureamid-Gruppe R-NH-CO-R' miteinander verknüpft sind. Man unterscheidet zwei Gruppen von Polyamiden: Aufbau aus einem Grundstoff durch Polykondensation von ω-Aminocarbonsäuren oder Polymerisation ihrer Lactame zum Polyamid 6-Typ und solche, die aus zwei Grundstoffen, Diaminen und Dicarbonsäuren, durch Polykondensation zum Polyamid 66-Typ entstanden sind. Darüber hinaus sind noch Copolyamide üblich, die eine Kombination der genannten Polyamidtypen darstellen.

Als "PO" werden Polyolefine zusammengefaßt. Beispiele für Polyolefine sind Polyethylen niedriger Dichte (LDPE), hoher Dichte (HDPE), lineares Polyethylen geringer Dichte (LLDPE), Polypropylen (PP), Polyisobutylen, Polybutylen und alle weiteren Polymere, die aus Olefinen hergestellt sind.

Desweiteren werden hier mit PO die Olefincopolymerisate bestehend aus Olefinen und anderen Monomeren zusammengefaßt, wobei in ihrer Zusammensetzung die Olefine überwiegen. Dies sind z.B. Ethylen-Copolymerisate mit ungesättigten Estern (z.B. Vinylacetat), Ethylen-Copolymerisate mit ungesättigten Carbonsäuren bzw. ihren Salzen.

Mit "PP" wird Polypropylen gekennzeichnet, unabhängig von der räumlichen Anordnung der seitenständigen Methyl-Gruppen. Mit "EPC" werden Copolymerisate des Propylen mit 1 bis 10 Mol-% Ethylen bezeichnet, wobei das Ethylen statistisch verteilt im Molekül vorliegt.

Als "LDPE" wird Polyethylen niedriger Dichte bezeichnet, das im Dichtebereich von 0,86 bis 0,93 g/cm³ liegt. Die LDPE-Moleküle zeichnen sich durch einen hohen Verzweigungsgrad aus.

Als "LLDPE" werden die linearen Polyethylene geringer Dichte bezeichnet, die neben Ethylen als Comonomere ein oder mehrere α-Olefine mit mehr als 3 C-Atomen enthalten. Als α-Olefine seien hier beispielsweise genannt: Buten-1, Hexen-1, 4-Methylpenten-1 und Octen-1. Aus der Polymerisation der genannten Stoffe ergibt sich die für LLDPE typische molekulare Struktur, die durch eine lineare Hauptkette mit daranhängenden Seitenketten gekennzeichnet ist. Die Dichte variiert zwischen 0,86 bis 0,935 g/cm³. Der Schmelzflußindex MFR liegt üblicherweise zwischen 0,3 bis 8 g/10 min. In einigen Veröffentlichungen werden die linearen Ethylen/α-Olefin-Copolymerisate entsprechend ihrer Dichte unterteilt in VLDPE oder ULDPE. Da aber nach GNAUCK/FRÜNDT (Einstieg in die Kunststoffchemie, Hanser Verlag 1991, S. 58) Eigenschaften, Verarbeitung und Verwendung dieser Copolymerisate weitgehend den Ethylen-Homopolymerisaten entspricht, wird hier auf eine genauere Unterscheidung verzichtet.

Mit "HDPE" werden die linearen Polyethylen hoher Dichte bezeichnet, die nur eine geringe Verzweigung ihrer Molekülketten aufweisen. Die Dichte des HDPE kann zwischen 0,9 g/cm³ bis zu 0,97 g/cm³ liegen.

Mit "mPE" wird hier ein Ethylen-Copolymerisat bezeichnet, das mittels Metallocen-Katalysatoren polymerisiert wurde. Als Comonomer wird vorzugsweise ein α-Olefin mit vier oder mehr Kohlenstoffatomen eingesetzt. Die mit konventionellen Ziegler-Natta-Katalysatoren hergestellten Polymere enthalten häufig in den niedermolekularen Fraktionen höhere Konzentrationen der α-Olefine. Als Folge der sehr einheitlichen katalytisch wirksamen Metallocen-Zentren findet man enge Molekulargewichtsverteilungen und bei Fraktionierungen sehr einheitlichen Einbau der α-Olefine sowohl in den hoch- als auch in den niedermolekularen Fraktionen. Die Dichte liegt vorzugsweise zwischen 0,900 und 0,930 g/cm³. Die Molekulargewichtsverteilung M_{w}/Mₙ ist kleiner 3,5, vorzugsweise kleiner 3.

Mit "EAA" werden Copolymerisat bestehend aus Ethylen und Acrylsäure und mit "EMAA" Copolymerisate bestehend aus Ethylen und Methacrylsäure bezeichnet. Der Ethylengehalt liegt vorzugsweise zwischen 60 und 90 Mol-%.

Mit "I" werden auf Olefinen basierende Copolymerisate bezeichnet, deren Moleküle über Ionenbindung vernetzt sind. Die ionischen Vernetzungen sind reversibel, dies bedingt ein Auflösen der ionischen Vernetzung bei den üblichen Verarbeitungstemperaturen (180°C bis 290°C) und eine Neubildung in der Abkühlphase. Üblicherweise werden als Polymere Copolymerisate aus Ethylen mit Acrylsäuren eingesetzt, die mit Natrium- oder Zinkionen vernetzt sind.

Mit "EVA" wird ein Copolymerisat bestehend aus Ethylen und Vinylacetat bezeichnet. Der Ethylengehalt liegt vorzugsweise zwischen 60 und 99 Mol-%.

Mit "HV" werden coextrudierbare, haftvermittelnde Polymere (Haftvermittler) bezeichnet. Demgegenüber werden unter Klebstoffen nichtmetallische Werkstoffe einschließlich Polymeren verstanden, die zwei Folienschichten durch Oberflächenhaftung und innere Festigkeit verbinden können, ohne daß sich das Gefüge der verbundenen Folienschichten wesentlich ändert. Im Gegensatz zu den Haftverrnittlern sind Klebstoffe nicht coextrudierbar, sondern müssen separat durch Flächenauftrag, z.B. durch Laminieren oder Flüssigauftrag, aufgebracht werden. Haftvermittler sind bevorzugt modifizierte Polyolefine, wie z.B. LDPE, LLDPE, mPE, EVA, EMAA, PP, EPC, die mit mindestens einem Monomer aus der Gruppe der α,β-einfach ungesättigten Dicarbonsäuren, wie beispielsweise Maleinsäure, Fumarsäure, Itaconsäure oder deren Säureanhydriden, Säureestern, Säureamiden und Säureimiden, gepfropft sind. Als extrudierbare Haftvermittler können daneben Copolymerisate von Ethylen mit α,β-einfach ungesättigten Dicarbonsäure, wie Acrylsäure, Methacrylsäure und/oder deren Metallsalze mit Zink oder Natrium und/oder deren Alkyl(C₁-C₄)ester, die auch mit mindestens einem Monomer aus der Gruppe der α,β-einfach ungesättigten Dicarbonsäuren, wie beispielsweise Maleinsäure, Fumarsäure, Itaconsäure oder deren Säureanhydriden, Säureestern, Säureamiden und Säureimiden, gepfropft sein können, zum Einsatz kommen. Daneben können auch Polyolefine wie z.B. Polyethylen, Polypropylen, Ethylen/Propylen-Copolymerisate oder Ethylen/α-Olefin-Copolymerisate, die mit Copolymerisaten von Ethylen mit α,β-einfach ungesättigten Dicarbonsäure, wie Acrylsäure, Methacrylsäure und/oder deren Metallsalzen mit Zink oder Natrium und/oder deren Alkyl(C₁-C₄)estern, gepfropft sind, zum Einsatz kommen. Besonders geeignet als Haftvermittler sind Polyolefine, insbesondere Ethylen/α-Olefin-Copolymerisate mit aufgepfropftem α,β-einfach ungesättigten Dicarbonsäureanhydrid, insbesondere Maleinsäureanhydrid. Die HV können auch ein Ethylen/Vinylacetat-Copolymerisat, vorzugsweise mit einem Vinylacetatgehalt von wenigsten 10 Gew.-%, enthalten.

Verschiedene Schichten einer Folie werden durch "/" getrennt. Mischungen von Polymeren einer Schicht werden durch runde Klammern gekennzeichnet und durch ein "+" verbunden. So beschreibt der Folienaufbau ".../LLDPE/(mPE+LDPE)" eine mehrschichtige Folie, wobei die eine Außenschicht eine Mischung aus mPE und LDPE enthält. Eine Innenschicht besteht aus LLDPE. Die restlichen Schichten der Folie werden durch "..." angedeutet.

Die folgenden Dokumente sind für die vorliegende Erfindung als relevanter Stand der Technik anzusehen:
In DE 3 216 097 C3 wird ein Verfahren zur Herstellung einer zweischichtigen Blasfolie bestehend aus Polyethylen bzw. Ethylen-Copolymeren beschrieben, die durch Verblockung der inneren Schicht hergestellt wird. Die innere Schicht besteht aus einem Ethylen/Vinylacetat-Copolymer oder aus Ethylen/Methacrylsäure-Copolymeren, die mit Ionen des Natriums oder Zinks teilweise vernetzt sind. Das Ethylen/Vinylacetat-Copolymer enthält bis zu 30 Gew.-% Vinylacetat, bevorzugt 3 bis 10 Gew.-% Vinylacetat. Diese Folie wird mit einer ein- oder mehrlagigen Trägerfolie kaschiert und zeichnet sich dann auf grund ihrer erhöhten Durchstoßfestigkeit, Planlage und Verschleißeigenschaften gegenüber Metall aus.
In EP 0 219 329 B1 wird eine mehrschichtige, coextrudierte Folie mit sehr hoher Sauerstoffbarriere beschrieben. Hierbei handelt es sich um eine 7-schichtige Blasfolie, die durch das Verblocken der innen liegenden Schicht, bestehend aus einem Ethylen/Vinylacetat-Copolymer mit sich selbst hergestellt wird. Die Folie enthält kein Polyamid, sondern EVOH und PVDC als Barriereschichten.
In EP 0 613 774 A1 wird eine mehrschichtige Folie basierend auf Polyamid und olefinischen Polymeren bzw. Copolymeren beschrieben, die den prinzipiellen Aufbau PA*/PE*/PA**/PE** hat. Jede dieser vier Schichten kann wiederum aus mehreren Schichten gleicher Art bestehen. Z.B. kann PA* aus verschiedenen PA6/PA6/12/PA6 bestehen. Gleiches gilt für die PE-Schichten, z.B. kann PE** aus den beiden Schichten eines extrudierbaren Haftvermittlers (HV) und LDPE als Siegelschicht bestehen.
In US 4 909 726 wird eine mehrschichtige Folie aus einem Blasfilm, der eine mit sich selbst siegelnde Innenschicht bestehend aus einem modifizierten polyethylenischen Haftvermittler enthält, beschrieben. Weiterhin enthält die Folie zwei Polyamid-Schichten, zwischen die eine EVOH-Schicht gebettet ist. Die Folie wird vorzugsweise als Blasfolie gefertigt, wobei die Innenschichten miteinander verschweißt werden. Folien dieser Art eignen sich insbesondere für vertikale Form- und Füllsiegelmaschinen, in denen die Folie zu einem Schlauch geformt wird. Die Längsnaht wird mit Siegelbacken hergestellt, die Schlauchenden sind geklippt. Die geschilderte Folie zeigt eine hohe Schlagfestigkeit. Gefüllte Packungen werden aus unterschiedlichen Höhen fallengelassen und die Anzahl der geöffneten Packungen protokolliert. Diese schlagartige Beanspruchung ist nicht vergleichbar mit der völlig anderen Beanspruchung durch einen spitzen oder scharfkantigen, die Folie durchstechenden Körper.

Allen Folien gemäß dem Stand der Technik ist gemeinsam, daß sie nicht in ausreichendem Maße tiefziehbar, rollneigungsarm und durchstichfest sind.

Es stellt sich daher die Aufgabe, eine Folie mit verbesserter
- Durchstichfestigkeit
- Tiefziehbarkeit und
- geringer Rollneigung
bereitzustellen.

Erfindungsgemäß gelang dies durch eine coextrudierte, symmetrisch aufgebaute Folie insbesondere fiir Tiefziehanwendungen, die mindestens aus folgenden Schichten besteht:
a) zwei Außenschichten 24 und 24' bestehend aus Polyolefinen oder Olefincopolymer oder einer Mischung dieser Polymere sowie gegebenenfalls üblichen Gleit- und/oder Antiblockmitteln,
b) zwei aneinander angrenzende Innenschichten 10 und 10' bestehend aus Polyolefinen oder Olefincopolymeren oder einer Mischung dieser Polymeren, deren Schmelzpunkt kleiner als 100°C ist, sowie gegebenenfalls üblichen Additiven,
c) zwei Innenschichten 16 und 16', die ein Polyamid oder eine Mischung verschiedener Polyamide enthalten,
d) einer Innenschicht 14 grenzend an die Innenschichten 12 und 16 und einer Innenschicht 14' grenzend an 12' und 16', die ein haftvermittelndes Polymer enthalten,
e) einer Innenschicht 20 grenzend an den Innenschichten 24 und 16 und einer Innenschicht 20' grenzend an 24' und 16', die ein haftvermittelndes Polymer enthalten,
f) zweier an die Innenschichten 10 bzw. 10' grenzenden Innenschichten 12 und 12' enthaltend ein Polyolefin oder Olefincopolymer oder eine Mischung dieser Polymere mit einem Schmelzpunkt größer als der der Innenschicht 10 bzw. 10'.

Die erfindungsgemäße Folie läßt sich auf allen üblichen Extrusionseinrichtungen, auf denen Polyamid oder Polyolefine verarbeitbar sind, extrudieren.

Die Außenschichten 24 und 24' enthalten Polyolefine oder Olefincopolymere oder eine Mischung dieser Polymere, vorzugsweise Polyethylen oder Ethylen-Copolymere, Ethylen-Copolymerisate mit ungesättigten Carbonsäuren oder deren Salzen oder Mischungen dieser Polymere. Besonders bevorzugt eingesetzt werden LDPE, LLDPE, mPE, I, HDPE, PP, EPC oder Mischungen dieser Polymere. Zur Verbesserung der Gleitfähigkeit können Gleit- und Antiblockmittel zugegeben werden. Die Menge des Gleitmittels in den Schichten 24 und 24' sollten je nach Schichtdicke zwischen 50 und 2000 ppm liegen. Der Gehalt des Antiblockmittels in den Schichten 24 und 24' sollte zwischen 50 und 3000 ppm, bevorzugt zwischen 100 und 2000 ppm liegen.

Die Innenschichten 16 und 16' enthalten als Polyamid bevorzugt PA6, PA11, PA12 und PA66 oder auf diesen basierende Copolyamide bzw. Mischungen aus diesen Polymeren. Copolyamide sind z.B. PA6/66, PA6/12, PA6/61, PA6/IPDI, PA66/610, PA6/11/66. Zur Verbesserung der Sauerstoffbarriere oder Tiefziehfähigkeit können diese Polyamide mit teilaromatischen PA's gemischt werden wie z.B. PA6I/6T, PAMXD6, PA6I.

Die aus PA bestehenden Innenschichten können durch Additive modifiziert sein. Als Additive werden z.B. Kristallisationsmittel, Schmiermittel und Verarbeitungshilfsmittel betrachtet.

Weiterhin können die Polyamide durch schichtartige Partikel modifiziert sein. Die schichtartigen Partikel können aus organischen wie auch aus anorganischen Stoffen bestehen. Als charakteristischer Partikeldurchmesser wird die Sehnenlänge des Partikels verstanden, die üblicherweise unterhalb von 700 nm liegt. Durch die Zugabe dieser Partikel kann z.B. die Sauerstoffbarriere oder die Zugfestigkeit der Folie verbessert werden.

Die Innenschichten 14 und 14' sowie 20 und 20' enthalten einen extrudierbaren Haftvermittler. Als solcher werden bevorzugt modifizierte Polyolefine bzw. Olefincopolymere eingesetzt. Besonders bevorzugt ist der Einsatz von mit ungesättigten Dicarbonsäuren gepfropften Polyolefinen oder Olefincopolymeren.

Die Innenschichten 12 und 12' bestehen aus Polyolefinen oder Olefincopolymeren oder Mischungen die Polymere. Der Schmelzpunkt der Schichten 12 und 12' ist größer als der der Schichten 10 und 10' und vorzugsweise kleiner als 120°C. Die Innenschicht 12 bzw. 12' haften an den Innenschichten 10 und 14 bzw. 10' und 14', eine zusätzliche, haftvermittelnde Schicht ist nicht notwendig.

Die Innenschichten 10 und 10' bestehen vorzugsweise aus Copolymeren aus Ethylen und ethylenischen Copolymerisaten oder Mischungen dieser Polymere, insbesondere aus EVA mit einem Schmelzpunkt von vorzugsweise weniger als 90°C.

In einer speziellen Ausführungsform der Erfindung kann zwischen der Innenschicht 16 und der haftvermittelnden Innenschicht 20 und zwischen der Innenschicht 16' und der haftvermittelnden Innenschicht 20' eine weitere Innenschicht plaziert werden, die aus Polyamid oder EVOH besteht. Dies kann z.B. zweckmäßig sein, um die Folie in ihren Tiefzieheigenschaften, Barriereverhalten gegenüber Gasen oder Strahlung zu verbessern. Als besonders kritisch hat sich die Sauerstoffdurchlässigkeit erwiesen, die es häufig zu reduzieren gilt. Ein weiterer Punkt ist die Durchlässigkeit von Strahlung, insbesondere von ultravioletter Strahlung (von 200 bis 380 nm). Es hat sich herausgestellt, daß bestimmte PA-Typen bestimmte Wellenlängen des UV-Lichtes absorbieren können und somit empfindliche Produkte wie z.B. Fleisch besser schützen. EVOH würde die Barriere der Folie insbesondere gegenüber Sauerstoff erheblich verbessern, wenn die mit PA erreichbare Sauerstoffbarriere nicht ausreichend ist.

In einer weiteren speziellen Ausführungsform kann zwischen den Innenschichten 20 und 24 und zwischen den Innenschichten 20' und 24' eine weitere Innenschicht bestehend aus PO plaziert werden. Dies kann z.B. zweckmäßig sein, um die Siegeleigenschaften oder optischen Eigenschaften der Folie zu verbessern. Es ist darauf zu achten, daß diese zusätzlichen Innenschichten an den Innenschichten 20 und 24 bzw. 20' und 24' haftet. Nur dann lassen sich die für eine Verpackung typischen Siegelfestigkeiten erreichen.

Folien mit dem erfindungsgemäßen Aufbau eignen sich insbesondere für Tiefziehanwendungen. Unter Tiefziehen wird die Verformung einer. Folie oder Platte verstanden, die nach Erwärmung mittels eine Luftdruckdifferenz oder eines Kolbens in eine vorgeformte Mulde gedrückt oder gezogen wird. Während des Tiefziehvorganges nimmt entsprechend des Reckverhältnisses die Foliendicke ab.

Folien mit dem erfindungsgemäßen Aufbau eignen sich außerdem für die als Lap-Seal bezeichneten Anwendungen. Hierbei werden die Außenseite 24 mit der Außenseite 24' versiegelt. Da beide Außenseiten die gleiche polymere Zusammensetzung aufweisen, ist mit einer guten Versiegelung zu rechnen.

Folien mit dem erfindungsgemäßen Folienaufbau eignen sich für die Verpackung unterschiedlichster Füllgüter, ob sie ein oder mehrere feste oder flüssige Phasen oder eine Kombination der genannten Phasen darstellen. Sie eignen sich für die Verpackung von kalten oder heißen Produkten. Ganz besonders eignen sie sich für scharfkantige Füllgüter, da die Durchstichfestigkeit der erfindungsgemäßen Folien einen besonderen Schutz für das Füllgut bietet.

Zur Verbesserung der Gleiteigenschaften können der Folie als Additive übliche Gleit- und Antiblockmittel zugesetzt werden. Beispiele sind als Antiblockmittel bekannte feste organische oder anorganische Partikel, die aus der äußeren Oberfläche der Siegelschicht hervortreten und auf diese Weise das Gleitverhalten der Folie verbessern. Hierfür geeignet sind Siliziumoxid, Calciumcarbonat, Magnesiumsilikat, Aluminiumsilikat, Calciumphosphat, Talkum und dergleichen. Bevorzugt kommt daraus Siliciumdioxid zum Einsatz. Bekannte organische Antiblockmittel sind beispielsweise unverträgliche Polymerisate wie Polyester, Polycarbonat. Wirksame Mengen liegen im Bereich von 0,05 bis 2 Gew.-%, vorzugsweise 0,1 bis 0,9 Gew.-%. Die mittlere Teilchengröße liegt zwischen 1 und 10 µm, wobei hier Teilchen mit kugelförmiger Gestalt besonders geeignet sind. Vorzugsweise werden diese Partikel nur in einer oder beiden Außenschichten eingesetzt.

Andere Additive, die die Gleitfähigkeit der Folie, auch im Zusammenwirken mit den genannten festen Partikeln, verbessern, sind die üblicherweise als Gleitmittel bezeichneten höheren aliphatischen Säureamide, höhere aliphatische Säureester, Wachse, Metallseifen sowie Polydimethylsiloxane oder andere Stoffe, wie sie bei Otto Piringer: Verpackungen für Lebensmittel, VCH Verlagsgesellschaft 1993, S. 53, angegeben werden. Die wirksame Menge an Gleitmittel liegt im Bereich von 0,01 bis 3 Gew.-%, vorzugsweise 0,02 bis 1 Gew.-%. Besonders geeignet ist der Zusatz von höheren aliphatischen Säureamiden im Bereich von 0,01 bis 0,25 Gew.-%. Ein insbesondere für die Außenschichten geeignetes aliphatisches Säureamid ist Erucasäureamid.

Der Gesamtgehalt des Gleitmittels in der Folie sollte 1000 ppm nicht übersteigen. Bei dickeren Folien sollten geringere absolute Gleitmittelgehalte angestrebt werden, da ansonsten mit einer verstärkten Ablagerung des Gleitmittels an der Folienoberfläche zu rechnen ist. Im Extremfall können sich optisch auffällige Flecken bestehend aus Gleitmittel auf der Folie zeigen.

Die erfindungsgemäße Folie kann in einer oder mehreren Schichten eingefärbt sein.

Die erfindungsgemäße Folie kann weitere Additive wie Antifogmittel oder Antistatika enthalten. Bekannte Antistatika sind nach Hans Domininghaus: Die Kunststoffe und ihre Eigenschaften, VDI-Verlag, Düsseldorf, 1992, S. 23, bei den sogenannten inneren Antistatika ethoxylierte tertiäre Amine von Fettsäuren oder ethoxylierte Glykolester von Fettsäuren oder aber bei den äußeren Antistatika quarternäre Ammoniumsalze von Fettsäuren. Als Antifogmittel, oder auch als Antibeschlagmittel, werden die grenzflächenaktiven Stoffe bezeichnet, die das Beschlagen der Folienoberfläche mit feinen Wassertropfen verhindern. Bekannte Antifogmittel sind z.B. Glycerolfettsäureester oder Polyoxyethylensorbitanmonooleat.

Die Außenschichten 24 und 24' können als Peelschicht ausgeführt sein. Ein bekanntes Verfahren zur Erreichung des Peeleffektes ist die Zugabe von Polybutylen in Polyethylenen oder ethylenischen Copolymeren, wie in Ahlhaus: Verpacken mit Kunststoffen, Carl Hanser Verlag 1997, S. 239, beschrieben.

Die Gesamtdicke der Folie sollte maximal 500 µm betragen, bevorzugt kleiner als 350 µm. Die Schichtdicke des Polyamides, bezogen auf die Gesamtdicke der Folie, sollte 40 % nicht übersteigen. Wenn der Folie die EVOH enthält, so sollte die Summe der Schichtdicken des EVOH bezogen auf die Gesamtdicke der Folie kleiner als 10 %, bevorzugt kleiner als 7 %, sein. Die Summe der Schichtdicken aller Haftvermittler, bezogen auf die Gesamtdicke der Folie, sollte kleiner als 30 %, bevorzugt kleiner als 15 %, sein.

### Meßverfahren:

Die Durchstichprüfung dient der Beurteilung von Folien, die mit spitzen Gegenständen beansprucht werden. Die Durchsticharbeit ist die zum Durchstechen einer membranartig aufgespannten Folie notwendige Arbeit. Es werden aus einem Folienmuster kreisförmige Proben mit dem Durchmesser 80 mm entnommen und membranartig in die Probenhalterung der elektronischen Zugprüfmaschine eingesetzt. Die Probenhalterung besitzt einen freien Durchmesser von 50 mm. Die Durchsticharbeit bestimmt sich aus dem Integral von Kraft mal Weg, die zum Durchstechen der Probe notwendig ist. Sie wird in N*cm angegeben. Der Prüfdorn besitzt an seiner Spitze einen unter 90° abgeschliffenen Kegel mit einem Durchmesser von 1 mm. Die Probe wird mit einer Geschwindigkeit von 100 mm/min durchstochen.

### Tiefziehversuche:

Auf einer horizontalen Tiefziehmaschine (Tiromat 3000 der Fa. Alfa Laval) werden die Folien einem praxisnahen Test unterzogen. Geprüft wird das Tiefziehverhalten der Folie bei einer Tiefziehtemperatur von 90°C. Die Heiz- und Tiefziehzeit beträgt 3 Sekunden. Die Muldengröße ist 184 mm x 114 mm (Breite x Länge), wobei die Ziehtiefe so lange um 5 mm erhöht wird, bis die Folie beim Tiefziehvorgang reißt. Es wird die größte Tiefe protokolliert, bei der die Folie nicht reißt.

### Rollneigung:

Die Prüfung dient zur Ermittlung der Rollneigung einer freien, nicht zwangsgeführten Folienbahn. Sie wird bei 23°C und 50 % relativer Feuchte gemessen. Die Folie darf keine Temperaturdifferenz zur Umgebung aufweisen. Hierzu wird ein runder Folienabschnitt mit dem Durchmesser von 118 mm so gelegt, daß sich die Folienenden nach oben frei einrollen können. Gemessen wird der Abstand der hochstehenden Enden von der Ebene. Ist das Folienende weniger als 5 mm eingerollt, so wird keine Rollneigung protokolliert. Rollt das Muster stärker ein, so wird eine geringe Rollneigung protokolliert. Rollt das Muster so stark ein, daß eine Höhenmessung nicht mehr möglich ist, da die freien Enden ineinander rollen, so wird eine starke Rollneigung protokolliert.

### Bestimmung des Schmelzpunktes von Kunststoffolien mit dem Schmelztischmikroskop:

Das Prüfverfahren dient der Bestimmung des Schmelzpunktes einer Schicht in einer Kunststoffolie. Unter dem Schmelzpunkt wird die Temperatur verstanden, bei der das Kristallgitter unter atmosphärischem Druck zerfällt. Die zu messende Probe (ein Mikrotomschnitt der Folie) wird auf einem Heiztisch erwärmt und dabei mit einem Mikroskop im polarisierten Durchlicht beobachtet. Besteht eine Schicht der Folie aus einem teilkristallinen, doppelbrechenden Kunststoff, verliert sie diese Eigenschaft im Moment des Schmelzens, was im polarisierten Licht mit Anordnung der Probe zwischen gekreuzt eingestellten Polarisationsfiltern beobachtet werden kann. Falls die Folienschicht eine zu schwache oder keine Doppelbrechung aufweist, kann bei unpolarisiertem Durchlicht beobachtet werden, in welchem Temperaturbereich ein Aufschmelzen auf dem Objektträger stattfindet. In den meisten Fällen kann die Schmelztemperatur mit einer Genauigkeit von +/-1°C angegeben werden.

Die Angabe von Schmelzflußraten bezieht sich im folgenden auf den nach DIN ISO 1133 bestimmten Wert. Erfolgen keine weiteren Angaben, wird als Meßbedingung in Form der Temperatur sowie der Auflagemasse Bedingung D in DIN ISO 1133 mit einer Temperatur von 190°C und einer Auflagemasse von 2,16 kg vorausgesetzt.

Die Dichte der Rohstoffe bezieht sich auf die Meßmethode entsprechend ISO 1183 (A).

### Beispiel 1

Eine mehrschichtige Blasfolie mit dem Aufbau EVA-1/HV-1/(95 % PA 6/66 + 5 % PA6I/6T)/HV-1/(70 % mPE-1 + 30 % LDPE-1)/EVA-2/EVA-2(70 % mPE-1 + 30 % LDPE-1)/HV-1/(95 % PA6/66 + 5 % PA6I/6T)/HV-1/EVA-1 wird durch Coextrusion und Verkleben der Folienhälften zwischen den beiden EVA-2-Schichten hergestellt. Die Schichtdicken betragen 25/9/45/9/20/17/17/20/9/45/9/25 µm. Das EVA-1 hat eine Dichte von 925 kg/m³, einen MFR von 2 g/10 min und enthält 5 Gew.-% Vinylacetat sowie Gleit- und Antiblockmittel. Der Haftvermittler HV-1 ist in allen Schichten gleich und basiert auf LLDPE gepfropft mit Maleinsäureanhydrid. Das PA6/66 enthält ca. 15 Gew.-% Comonomer. Beim amorphen PA6I/6T beträgt das Verhältnis der Säuren ca. 2/3 Isophthalsäure und ca. 1/3 Terephthalsäure. Das mPE-1 ist ein mit Hilfe von Metallocen-Katalysatortechnik hergestelltes lineares PE der Dichte 902 kg/m³ und hat einen MFR von 1 g/10 min; das Comonomer ist Octen-1. Das LDPE-1 hat eine Dichte von 924 kg/m³ und einen MFR von 0,8 g/10 min. Das EVA-2 enthält 25 Gew.-% Vinylacetat, es hat einen MFR von 2 g/10 min und einen Schmelzpunkt von ca. 78°C. Der Schmelzpunkt der Schichten 12 bzw. 12' (70 % mPE-1 + 30 % LDPE-1) liegt bei ca. 103°C.

### Beispiel 2

Eine mehrschichtige Blasfolie mit dem Aufbau I/HV-1/(95 % PA6/66 + 5 % PA6I/6T)/HV-1/(70 % mPE + 30 % LDPE-1)/EVA-2/EVA-2/(70 % mPE + 30 % LDPE-1)/HV-1/(95 % PA6/66 + 5 % PA6I/6T)/HV-1/I wird durch Coextrusion und Verkleben der Folienhälften zwischen den beiden EVA-2-Schichten hergestellt. Die Schichtdicken entsprechen denen des Beispiels 1. Beispiel 2 unterscheidet sich von Beispiel 1 lediglich in der Außenschicht. Es besteht in der Außenschicht aus einem Ionomer, welches mit ca. 15 Gew.-% Methacrylsäure copolymerisiert und mit Natrium-Ionen teilweise neutralisiert wurde.

### Beispiel 3

Eine mehrschichtige Blasfolie mit dem Aufbau (50 % mPE-2 + 50 % EVA-3)/HV-2/(PA6/66)/HV-2/EVA-3/EVA-2/EVA-2/EVA-3/HV-2/(PA6/66)/HV-2/(50 % mPE-2 + 50 % EVA-3) wird durch Coextrusion und Verkleben der Folienhälften zwischen den beiden EVA-2-Schichten hergestellt. Die Schichtdicken betragen 34/7/36/7/17/24/24/17/7/36/7/34 µm. Das EVA-3 hat eine Dichte von 925 kg/m³, einen MFR von 3 g/10 min und enthält 5 Gew.-% Vinylacetat. Der Haftvermittler HV-2 ist in allen Schichten gleich und basiert auf einer Mischung aus LDPE und LLDPE gepfropft mit Maleinsäureanhydrid. Das PA6/66 entspricht dem in Beispiel 1 erwähnten. Das mPE-2 ist ein mit Hilfe von Metallocen-Katalysatortechnik hergestelltes lineares PE der Dichte 918 kg/m³ und hat einen MFR von 1 g/10 min; das Comonomer ist Hexen-1. Alle anderen Polymere entsprechen den in Beispiel 1 genannten. Der Schmelzpunkt der Schichten 12 bzw. 12' (EVA-3) liegt bei ca. 101°C.

### Vergleichsbeispiel 4:

Eine coextrudierte Folie wird mit dem Aufbau PA6/HV-3/(85 % PA6 + 15 % PA6I/6T)/HV-3/LDPE-2/EVA-4 in den Schichtdicken 30/25/70/25/80/50 µm hergestellt, wobei die beiden Schichten LDPE-2/EVA-4 auf den bereits vorher gefertigten Verbund beschichtet werden. Das PA6 hat eine relative Lösungsviskosität von 3,8 gemessen in m-Kresol (c= 10 g/l). Das PA6 ist in der Außenschicht sowie in der Innenschicht gleich. Das amorphe PA6I/6T entspricht dem in Beispiel 1 genannten. Der Haftvermittler HV-3 enthält LLDPE gepfropft mit Maleinsäureanhydrid. Das LDPE-2 hat eine Dichte von 915 kg/m³ und einen MFR von 7,5 g/10 min. Das EVA-4 enthält 5 Gew.-% Vinylacetat, hat eine Dichte von 925 kg/m³ und einen MFR von 7 g/10 min.

### Vergleichsbeispiel 5:

Das Vergleichsbeispiel 5 entspricht dem Vergleichsbeispiel 4, jedoch hat es die Schichtdickenverteilung 30/30/70/30/100/60 µm.

| | Foliendicke [µm] | max.Tiefzug [mm] | Rollneigung | Durchsticharbeit [N*cm] |
|---|---|---|---|---|
| Beispiel 1 | 250 | 110 | keine | 3,1 |
| Beispiel 2 | 250 | 115 | keine | 3,9 |
| Beispiel 3 | 250 | 105 | keine | 3,1 |
| Vergl.-Beisp.4 | 280 | 95 | gering | 2,7 |
| Vergl.-Beisp.5 | 320 | 95 | gering | 3,0 |

Aus der Tabelle ist klar ersichtlich, daß die erfindungsgemäßen Folien 1 bis 3 keine Rollneigung aufweisen, sich besser tiefziehen lassen und bei deutlich reduzierter Foliendicke einen bessere Durchstichfestigkeit aufweisen.

## Patentansprüche

1. Durch Coextrusion hergestellte, symmetrisch aufgebaute, mehrschichtige Folie aufgebaut mindestens aus
zwei aneinander grenzenden Innenschichten (10) und (10') bestehend aus Polyolefinen oder Olefincopolymeren oder Mischungen dieser Polymeren, deren Schmelzpunkt kleiner als 100 °C ist, sowie gegebenenfalls üblichen Additiven,
zwei an die Innenschichten (10) bzw. (10') grenzenden Innenschichten (12) und (12') enthaltend ein Polyolefin oder Olefincopolymer oder eine Mischung dieser Polymere mit einem Schmelzpunkt größer als der der Innenschicht (10) bzw. (10'), wobei die Innenschicht (12) an den Innenschichten (10) und (14) und die Innenschicht (12') an den Innenschichten (10') und (14') haftet,
einer Innenschicht (14) grenzend an die Innenschichten (12) und (16) und einer Innenschicht (14') grenzend an die Innenschichten (12') und (16'), wobei die Innenschichten (14) und (14') ein haftvermittelndes Polymer enthalten,
zwei Innenschichten (16) und (16'), die ein Polyamid oder eine Mischung verschiedener Polyamide enthalten,
einer Innenschicht (20) grenzend an den Schichten (24) und (16) und einer Innenschicht (20') grenzend an den Schichten (24') und (16'), wobei die Innenschichten (20) und (20') ein haftvermittelndes Polymer enthalten,
zwei Außenschichten (24) und (24') bestehend aus Polyolefinen oder Olefincopolymeren oder einer Mischung dieser Polymeren sowie gegebenenfalls üblichen Gleit- und/ oder Antiblockmitteln.

2. Folie nach Anspruch 1, **dadurch gekennzeichnet, daß** die Außenschicht (24) bzw. (24') aus Polyethylen bzw. Ethylen-Copolymeren, Ethylen-Copolymerisaten mit ungesättigten Carbonsäuren bzw. deren Salzen, oder Mischungen dieser Polymere besteht.

3. Folie nach einem der Ansprüche 1 oder 2, **dadurch gekennzeichnet, daß** die Innenschicht (10) bzw. (10') aus Copolymeren aus Ethylen und ethylenischen Copolymerisaten oder Mischungen dieser Polymere besteht.

4. Folie nach einem der Ansprüche 1 bis 3, **dadurch gekennzeichnet, daß** die Innenschicht (10) bzw. (10') einen Schmelzpunkt unterhalb von 90°C hat.

5. Folie nach Anspruch 4, **dadurch gekennzeichnet, daß** die Innenschicht (10) bzw. (10') aus EVA besteht.

6. Folie nach einem der Ansprüche 1 bis 5, **dadurch gekennzeichnet, daß** das Polyamid in den Schichten (16) and (16') PA6, PA66, PA12, PA11, PA6/66, PA66/610, PA6/11/66, PA6/6I, PA6/IPDI, PA6/12, PA6I, PA6I/6T, PAMXD6 oder eine Mischung dieser Polyamide ist.

7. Folie nach einem der Ansprüche 1 bis 6, **dadurch gekennzeichnet, daß** die Innenschicht (20) bzw. (20') mit ungesättigten Dicarbonsäuren gepfropfte Polyolefine oder Olefincopolymere enthält.

8. Folie nach einem der Ansprüche 1 bis 7, **dadurch gekennzeichnet, daß** die Innenschicht (14) bzw. (14') und die Innenschicht (20) bzw. (20') extrudierbare Haftvermittler enthalten.

9. Folie nach einem der Ansprüche 1 bis 8, **dadurch gekennzeichnet, daß** die Innenschicht (12) bzw. (12') aus Polyethylen oder ethylenischen Copolymerisaten besteht und der Schmelzpunkt der Innenschicht (12) bzw. (12') kleiner als 120°C ist.

10. Folie nach einem der Ansprüche 1 bis 9, **dadurch gekennzeichnet, daß** an die Innenschichten (16) und (20) und an die Innenschichten (16') und (20') jeweils eine weitere Innenschicht grenzt, die aus Polyamid oder EVOH besteht.

11. Folie nach einem der Ansprüche 1 bis 10, **dadurch gekennzeichnet, daß** an die Innenschichten (20) und (24) und an die Innenschichten (20') und (24') jeweils eine weitere Innenschicht grenzt, die aus Polyolefinen vorzugsweise aus Polyethylen oder ethylenischen Copolymerisaten besteht.

12. Folie nach einem der Ansprüche 1 bis 11, **dadurch gekennzeichnet, daß** sie in einen oder mehreren Schichten eingefärbt ist.

13. Folie nach einem der Ansprüche 1 bis 12, **dadurch gekennzeichnet, daß** die Außenschichten (24) und (24') als Peelschicht ausgeführt sind.

14. Verwendung einer Folie nach einem der Ansprüche 1 bis 13 für die Verpackung unterschiedlichster Füllgüter, vorzugsweise scharfkantiger Füllgüter.

## Claims

1. Symmetrically structured multi-layer film produced by coextrusion, constructed from at least
two mutually adjoining internal layers (10) and (10') consisting of polyolefins or olefin copolymers or mixtures of these polymers with a melting point of less than 100°C and, where appropriate, the usual additives,
two internal layers (12) and (12') respectively adjoining the internal layers (10) or (10') containing a polyolefin or olefin copolymer or a mixture of these polymers with a melting point greater than that of the internal layer (10) or (10'), with the internal layer (12) adhering to the internal layers (10) and (14) and the internal layer (12') adhering to the internal layers (10') and (14'),
an internal layer (14) adjoining the internal layers (12) and (16) and an internal layer (14') adjoining the internal layers (12') and (16'), with the internal layers (14) and (14') containing an adhesion-promoting polymer,
two internal layers (16) and (16'), which contain a polyamide or a mixture of different polyamides,
an internal layer (20) adjoining the layers (24) and (16) and an internal layer (20') adjoining the layers (24') and (16'), with the internal layers (20) and (20') containing an adhesion-promoting polymer,
two external layers (24) and (24') consisting of polyolefins or olefin copolymers or a mixture of these polymers and, where appropriate, the usual lubricants and/or anti-blocking agents.

2. Film according to claim 1, **characterised in that** the external layer (24) or (24') consists of polyethylene, or ethylene copolymers, ethylene copolymerisates with unsaturated carboxylic acids or their salts or mixtures of these polymers.

3. Film according to one of claims 1 or 2, **characterised in that** the internal layer (10) or (10') consists of copolymers made of ethylene and ethylenic copolymerisates or mixtures of these polymers.

4. Film according to one of claims 1 to 3, **characterised in that** the internal layer (10) or 10') has a melting point of below 90°C.

5. Film according to claim 4, **characterised in that** the internal layer (10) or (10') consists of EVA.

6. Film according to one of claims 1 to 5, **characterised in that** the polyamide in the layers (16) and (16') is PA6, PA66, PA12, PA11, PA6/66, PA66/610, PA6/11/66, PA6/6I, PA6/IPDI, PA6/12, PA6/12, PA6I, PA6I/6T, PAMXD6 or a mixture of these polyamides.

7. Film according to one of claims 1 to 6 **characterised in that** the internal layer (20) or (20') contains polyolefins or olefin copolymers grafted with unsaturated dicarboxylic acids.

8. Film according to one of claims 1 to 7, **characterised in that** the internal layer (14) or (14') and the internal layer (20) or (20') contain extrudable adhesion promoters.

9. Film according to one of claims 1 to 8, **characterised in that** the internal layer (12) or (12') consists of polyethylene or ethylenic copolymerisates and the melting point of the internal layer (12) or (12') is less than 120°C.

10. Film according to one of claims 1 to 9, **characterised in that** the internal layers (16) and (20) and the internal layers (16') and (20') are each adjoined by a further internal layer consisting of polyamide or EVOH.

11. Film according to one of claims 1 to 10, **characterised in that** the internal layers (20) and (24) and the internal layers (20') and (24') are each adjoined by a further internal layer consisting of polyolefins, preferably polyethylene or ethylenic copolymerisates.

12. Film according to one of claims 1 to 11, **characterised in that** it is coloured in one or more layers.

13. Film according to one of claims I to 12 **characterised in that** the external layers (24) and (24') are formed as peel layers.

14. Use of a film according to one of claims 1 to 13 for packaging for a wide variety of contents, preferably sharp-edged contents.

## Revendications

1. Feuille à plusieurs couches, construite de manière symétrique, produite par coextrusion, comportant au moins
- deux couches intérieures (10) et (10') attenantes l'une à l'aut composées de polyoléfines ou de copolymères d'oléfine ou de mélanges de ces polymères, dont le point de fusion est inférieur à 100°C, ainsi qu'éventuellement d'autres additifs habituels,
- deux couches intérieures (12) et (12') attenantes respectivement aux couches intérieures (10) et (10') contenant une polyoléfine ou un copolymère d'oléfine ou un mélange de ces polymères ayant un point de fusion respectivement supérieur à ceux des couches intérieures (10) et (10'), la couche intérieure (12) adhérant aux couches intérieures (10) et (14) et la couche intérieure (12') adhérant aux couches intérieures (10') et (14'),
- une couche intérieure (14) attenante aux couches intérieures (12) et (16) et une couche intérieure (14') attenante aux couches intérieures (12') et (16'), les couches intérieures (14) et (14') contenant un polymère qui est un agent de pontage,
- deux couches intérieures (16) et (16'), qui contiennent un polyamide ou un mélange de différents polyamides,
- une couche intérieure (20) attenante aux couches (24) et (16) et une couche intérieure (20') attenante aux couches (24') et (16'), les couches intérieures (20) et (20') contenant un polymère qui est un agent de pontage,
- deux couches extérieures (24) et (24') composées de polyoléfines ou de copolymères d'oléfines ou d'un mélange de ces polymères ainsi qu'éventuellement des agents lubrifiants et/ou des agents antiadhérants.

2. Feuille selon la revendication 1, **caractérisée en ce que** la couche extérieure (24) ou (24') est composée de polyéthylène ou de copolymères d'éthylène, de copolymères d'éthylène comportant des acides carboxyliques insaturés ou leur sels, ou de mélanges de ces polymères.

3. Feuille selon une des revendications 1 ou 2, **caractérisée en ce que** la couche intérieure (10) ou (10') est composée de copolymères d'éthylène et de copolymères éthyléniques ou de mélanges de ces polymères.

4. Feuille selon une des revendications de 1 à 3, **caractérisée en ce que** la couche intécieure (10) ou (10') a (ont) un point de fusion inférieur à 90°C.

5. Feuille selon la revendication 4, **caractérisée en ce que** la couche intérieure (10) ou (10') est composée d'EVA.

6. Feuille selon une des revendications de 1 à 5, **caractérisée en ce que** le polyamide des couches (16) et (16') est du PA6, du PA66, du PA12, du PA11, du PA 6/66, du PA66/610, du PA6/11/66, du PA6/61, du PA6/IPDI, du PA6/12, dû PA61, du PA6I/6T, du PAMXD6 ou un mélange de ces polyamides.

7. Feuille selon une des revendications de 1 à 6, **caractérisée en ce que** la couche intérieure (20) ou (20') contient des polyoléfines ou des copolymères d'oléfine greffé avec des acides dicarboxyliques insaturés.

8. Feuille selon une des revendications de 1 à 7, **caractérisée en ce que** la couche intérieure (14) ou (14') et la couche intérieure (20) ou (20') contiennent des agents de pontage pouvant être extrudés.

9. Feuille selon une des revendications de 1 à 8, **caractérisée en ce que** la couche intérieure (12) ou (12') est composée de polyéthylène ou de copolymères éthyléniques, et **en ce que** le point de fusion de la couche intérieure (12) ou (12') est inférieur à 120°C.

10. Feuille selon une des revendications de 1 à 9, **caractérisée en ce qu'**une couche intérieure complémentaire composée de polyamide ou d'EVOH est disposée de manière attenante respectivement aux couches (16) et (20) et aux couches intérieures (16') et (20').

11. Feuille selon une des revendications de 1 à 10, **caractérisée en ce qu'**une couche intérieure complémentaire composée de polyoléfines, de préférence de polyéthylène ou de copolymères éthyléniques est disposée de manière attenante respectivement aux couches intérieures (20) et (24) et aux couches intérieures (20') et (24').

12. Feuille selon une des revendications 1 à 11, **caractérisée en ce qu'**elle est teintée dans une ou plusieurs couches.

13. Feuille selon une des revendications 1 à 12, **caractérisée en ce que** les couches extérieures (24) et (24') sont réalisées en tant que couches décollables.

14. Utilisation d'une feuille selon une des revendications de 1 à 13 pour l'emballage de marchandises à remplir les plus diverses, de préférence des marchandises à bords vifs.
